# EUROPÄISCHE PATENTANMELDUNG

(11) **EP 1 429 173 A1**
(43) Veröffentlichungstag der Anmeldung: **16.06.2004**
(21) Anmeldenummer: 03104604.8
(22) Anmeldetag: 09.12.2003
(51) Int. Cl.: G02C 7/14, G02C 7/02

(54) **Binokulare Sehhilfe für den Nahbereich**

(30) Priorität: 14.12.2002 DE 10258548
(71) Anmelder: ESCHENBACH OPTIK GmbH + Co., 90409 Nürnberg (DE)
(72) Erfinder: Henkelmann, Klaus, 90552, Röthenbach (DE); Kohl, Peter, 90552, Oberasbach (DE)
(74) Vertreter: Mörtel & Höfner

(57) **Zusammenfassung**

Binokulare Sehhilfe für den Nahbereich, mit einer Linse (4) mit einer auf ihrer Oberfläche (12) angeordneten ersten, um eine außerhalb der Linse (4) angeordnete Drehachse (8) rotationssymetrischen Oberflächenstruktur (6) zum Erzeugen einer prismatischen Brechkraft.

## Beschreibung

Die Erfindung bezieht sich auf eine binokulare Sehhilfe für den Nahbereich.

Bei der binokularen Betrachtung eines im Nahbereich, d. h. eines in einer Entfernung von etwa 10 - 30 cm befindlichen Gegenstandes, müssen die Sehachsen der beiden Augen auf einen Konvergenzwinkel eingestellt werden. Eine solche Konvergenzanpassung ist jedoch für eine Vielzahl von Personen auf Grund einer Behinderung entweder nur schwer oder nicht möglich. Darüber hinaus kann auch bei gesunden Personen eine Übermüdung eintreten, wenn diese beispielsweise aus beruflichen Gründen längere Zeit Arbeiten im Nahbereich ausführen. Insbesondere altersbedingt in ihrer Akkommodationsfähigkeit eingeschränkte Menschen (Altersweitsichtigkeit) sind darauf angewiesen, beim Lesen kleingedruckter Texte das Lesegut nahe vor die Augen zu führen, um auf diese Weise zusätzlich zur vergrößernden Brille das auf der Netzhaut erzeugte Bild des Gegenstandes zu vergrößern. Beim binokularen Sehen treten dann jedoch häufig Probleme mit einer unzureichenden Fähigkeit zur Konvergenzanpassung auf. In diesem Fall ist zusätzlich zur Verwendung einer vergrößernden Lesehilfe der Einsatz von Konvergenzprismen notwendig. Diese Konvergenzprismen haben jedoch eine Reihe von Nachteilen. Einerseits bewirken diese, dass die Linsen relativ dick und schwer werden. Da sich andererseits auch die Basis des Konvergenzprismas und somit die dickste Stelle der Linse an dem der Nase zugewandten, innenliegenden Fassungsrand des verwendeten Brillengestells befindet, ist sowohl der Tragekomfort verringert als auch das Erscheinungsbild der Brille in ästhetischer Hinsicht verschlechtert.

Aus der EP 1 184 710 A1 ist eine binokulare Lesehilfe für den Nahbereich bekannt, bei der Linsen zum Einsatz kommen, die auf ihrer dem Auge zugewandten planen Oberfläche eine sägezahnartige Oberflächenstruktur aufweisen, bei der jeder Zahn ein Prisma bildet. Auf diese Weise wird das üblicherweise verwendete Konvergenzprisma in viele parallel
nebeneinander angeordnete kleine Prismen zerlegt, deren Zahnhöhe gegenüber der Basisbreite eines herkömmlichen Konvergenzprismas entsprechend der Anzahl der verwendeten Zähne reduziert ist. Um die optische Abbildungsqualität nicht ungünstig zu beeinflussen, ist es jedoch erforderlich, die Basis und die Flanke der einzelnen Prismen mit hoher Genauigkeit und Oberflächengüte zu fertigen. Dies hat sich in der Praxis für die in der EP 1184710 A1 vorgeschlagene Oberflächenstruktur als problematisch und aufwendig herausgestellt.

Der Erfindung liegt nun die Aufgabe zugrunde, eine binokulare Sehhilfe für den Nahbereich anzugeben, mit der die Nachteile üblicher Konvergenzprismen vermieden sind und die mit hinreichend guter Abbildungsqualität einfach und kostengünstig hergestellt werden kann.

Die genannte Aufgabe wird gemäß der Erfindung gelöst mit einer binokularen Sehhilfe mit den Merkmalen des Patentanspruches 1. Gemäß diesen Merkmalen weist die binokulare Sehhilfe eine Linse auf, die zum Erzeugen einer prismatischen Brechkraft mit einer auf ihrer Oberfläche angeordneten ersten, um eine außerhalb der Linse angeordnete Drehachse rotationssymmetrischen Oberflächenstruktur versehen ist. Durch die Verwendung einer rotationssymmetrischen Oberflächenstruktur ist es möglich, diese direkt oder indirekt, d. h. im Falle der Verwendung einer Linse aus einem spritztechnisch verarbeitbaren Polymer den zu ihrer Herstellung benötigten Stempel einer Spritzgießform, in einem Drehverfahren herzustellen. Mit einem Drehverfahren, insbesondere einem Diamantdrehverfahren, können mit fertigungstechnisch vertretbarem Aufwand Oberflächenstrukturen im µm-Bereich mit hoher Genauigkeit und Oberflächenqualität hergestellt werden. Dadurch kann eine optisch hohe Qualität der Linse erreicht werden.

In einer vorteilhaften Ausgestaltung der Erfindung hat die Oberflächenstruktur die Abbildungseigenschaften eines Ausschnittes aus dem Randbereich einer fokussierenden Linse. Bei dieser Ausgestaltung wird ausgenutzt, dass der Rand einer plankonvexen oder bikonvexen Linse annähernd, d. h. bei Vernachlässigung der durch die Krümmung der Oberfläche herbeigeführten zusätzlichen Ablenkung, die Wirkung eines Prismas hat. Durch diese zusätzliche Fokussierung tritt außerdem zur ablenkenden Brechkraft eine vergrößernde Brechkraft hinzu, so dass für den Fall, dass eine vergrößernde Brechkraft durch eine konventionelle konvexe Oberfläche der Linse erzeugt wird, die Krümmung und damit die Gesamtdicke der Linse kleiner wird.

Als Oberflächenstrukur ist insbesondere eine diffraktive Struktur, vorzugsweise eine diffraktive Struktur mit höherer Ordnung (MOD(multiorder diffractive)-Struktur) vorgesehen. Mit solchen Oberflächenstrukturen lassen sich hervorragende Abbildungsqualitäten erzielen. Alternativ hierzu kann als Oberflächenstruktur auch eine Fresnelstruktur vorgesehen sein.

In einer weiteren vorteilhaften Ausgestaltung der Erfindung wird die Oberflächenstruktur durch ringförmig nebeneinander liegende Kegelflächen gebildet. Diese lassen sich fertigungstechnisch besonders einfach herstellen.

Zusätzliche vorteilhafte Ausgestaltungen ergeben sich gemäß der weiteren Unteransprüche.

Zur weiteren Erläuterung der Erfindung wird auf die Ausführungsbeispiele der Zeichnung verwiesen. Es zeigen:
- Fig. 1: eine binokulare Sehhilfe mit Linsen gemäß der Erfindung in einer Draufsicht,
- Fig. 2-4: eine Linse gemäß der Erfindung in einer Schnittdarstellung beziehungsweise in einem stark vergrößerten Teilschnitt entlang der Linie A-A,
- Fig. 5: eine vorteilhafte Ausgestaltung einer binokularen Sehhilfe mit zweiteiligen Linsen, von denen eine in einer Explosionsdarstellung gezeigt ist,
- Fig. 6,7: die in Fig. 5 dargestellte Brille in einem Schnitt B-B parallel zur optischen Achse.

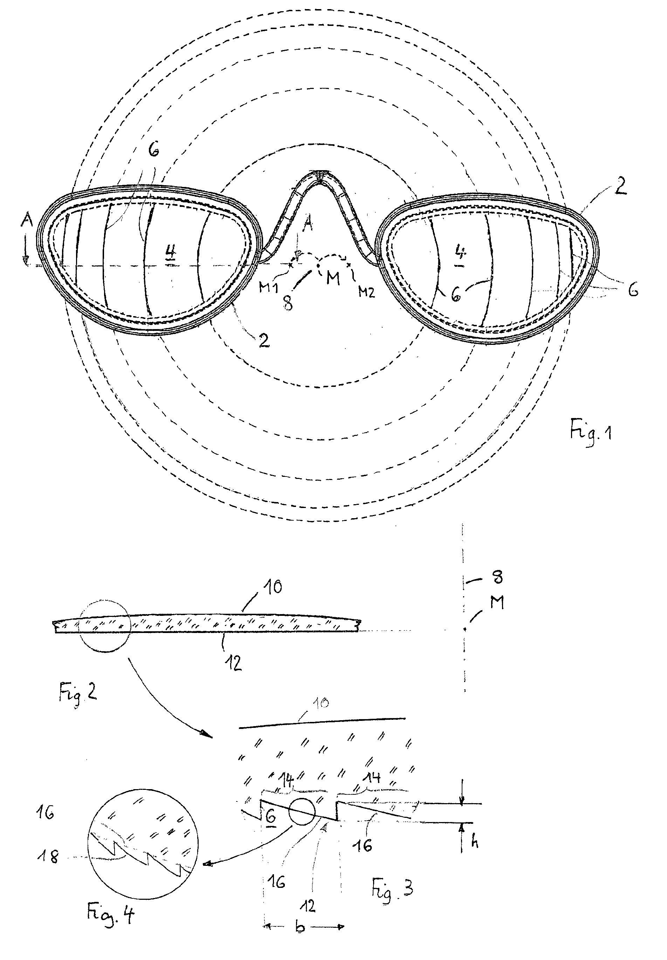

Gemäß Figur 1 sind in die Fassungen 2 einer binokularen Sehhilfe jeweils Linsen 4 eingesetzt, die an einer ihrer Oberflächen eine gestrichelt angedeutete erste Oberflächenstruktur 6 zum Erzeugen einer prismatischen Brechkraft aufweist. Die erste Oberflächenstruktur 6 ist rotationssymmetrisch um eine senkrecht zur Zeichenebene und mittig zwischen den beiden Linsen 4 gelegene Drehachse 8, die die Zeichenebene in Schnittpunkt M schneidet. Die auf den Linsen 4 angeordnete erste Oberflächenstruktur 6 ist jeweils ein Ausschnitt aus dem Randbereich einer fokussierenden Linse, die gebildet würde, wenn die erste Oberflächenstruktur 6 und ein sie tragender Körper über die Linsen 4 hinaus, wie in der Figur gestrichelt eingezeichnet, ergänzt würden. Mit anderen Worten: Die Oberfächenstruktur 6 weist die Abbildungseigenschaften eines Ausschnitts aus einer fokussierenden Linse auf, der sich außerhalb der optischen Achse (Mitte) in einem Randbereich der Linse befindet. Der Schnittpunkt M, d.h. die optische Achse des durch die Oberflächenstruktur 6 gebildeten Linsenauschnitts liegt bei aufgesetzter Sehhilfe auf der Verbindungslinie der Pupillenachsen, die in der Figur mit der Linie A-A zusammenfällt.

Die Oberflächenstruktur 6 der beiden Linsen 4 muss nicht, wie im Ausführungsbeispiel der Figur dargestellt, rotationssymmetrisch um einen gemeinsamen Mittelpunkt M sein, der in der Mitte zwischen den beiden Fassungen 2 liegt. Vielmehr können der Mittelpunkt der rotationssymmetrischen Oberflächenstruktur 6 für die eine Linse 4 und der Mittelpunkt der Oberflächenstruktur 6 für die andere Linse 4 voneinander beabstandet sein, wenn diese in die Fassungen 2 des Brillengestells eingebaut sind. Die Mittelpunkte können beispielsweise aus der Mitte zwischen den Fassungen 2 näher an den inneren Rand der jeweiligen Fassung 2 verschoben sein, wie dies in der Figur durch die gestrichelten Pfeile und die Mittelpunkte M1 und M2 veranschaulicht ist. Dies hat den Vorteil, dass der Durchmesser des zur Fertigung der Linsen 4 erforderlichen Spritzgussstempel kleiner und dessen Herstellung vereinfacht wird. Auch in dieser Ausführungsform sind die Mittelpunkte M1 und M3 auf der Verbindungslinie der Pupillenachsen angeordnet.

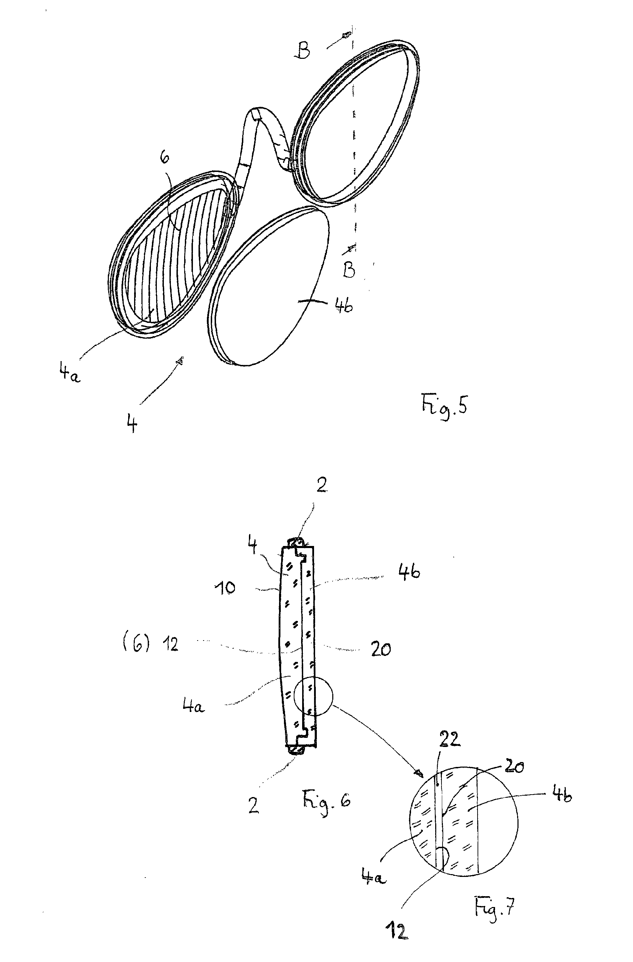

Gemäß Figur 2 ist die Linse 4 eine Plankonvexlinse, deren vom Auge abgewandte Oberfläche 10 konvex gekrümmt ist und eine vergrößernde Brechkraft erzeugt. Die dem Auge zugewandte Oberfläche 12 ist plan und gemäß Figur 3 mit der ersten Oberflächenstruktur 6 versehen, die aus konzentrischen Zahnringen 14 aufgebaut ist. Bei der nicht maßstabsgetreu und nur schematisch veranschaulichten ersten Oberflächenstruktur 6 handelt es sich um eine MOD-Struktur mit hoher Ordnung m. Die Breite b der Zahnringe 14 nimmt bei einer solchen MOD-Struktur bei gleichbleibender Höhe h signifikant zum Rand ab, wie dies auch in Fig. 1 schematisch dargestellt ist. Bei einer MOD-Struktur mit m = 60 und einem auf eine Pupillendistanz von 63 mm eingestellten Brillengestell sind zum Erzeugen einer prismatischen Brechkraft von 4,8 pdpt 58 konzentrische Zahnringe 14 erforderlich, wobei die Zahnhöhe h etwa 0,066 mm beträgt.

Die Flanken 16 der Zahnringe 14 sind dabei in einer die Drehachse 8 enthaltenden Schnittebene gekrümmt, um die für abbildende diffraktive Strukturen erforderliche Bedingung zu erfüllen, nach der zum Erzielen einer konstruktiven Überlagerung der Gangunterschied innerhalb eines Zahnrings 14 für die Konstruktionswellenlänge konstant sein sollte.

Zur Korrektur der von der ersten Oberflächenstruktur 6 erzeugten Farbfehler kann den Flanken 16 gemäß Figur 4 eine zweite Oberflächenstruktur 18 überlagert sein.

Alternativ zu der in Figur 3 dargestellten gekrümmten Ausgestaltung der Flanke 16 kann diese auch einer die Drehachse enthaltende Schnittebene gerade sein, d. h. die Form der Oberfläche eines Kegelstumpfes haben. Mit anderen Worten: Die Zahnringe sind durch konzentrisch angeordnete Kegelflächen gebildet. Die kegelförmigen Zahnringe weisen dann die gleiche Breite und Höhe auf. Grundsätzlich ist auch denkbar, die Breite der Zahnringe und damit auch deren Höhe in Abhängigkeit von deren Abstand zum Mittelpunkt zu variieren.

In einer vorteilhaften Ausgestaltung gemäß Figuren 5 bis 7 ist die Linse 4 aus einem ersten und einem zweiten Bauteil 4a bzw. 4b zusammengesetzt. Das zweite Bauteil 4b dient dabei in erster Linie als Abdeckscheibe zum Schutz der auf der Oberfläche des ersten Bauteils 4a angeordneten ersten Oberflächenstruktur 6.

Alternativ zu der in Fig. 4 dargestellten Ausführungsform kann in dieser Ausführungsform die farbkorrigierende zweite Oberflächenstruktur 18 auch auf der dem ersten Bauteil 4a zugewandten, ebenfalls planen Oberfläche 20 des zweiten Bauteils 4b angeordnet werden.

Darüber hinaus können sowohl die zweite Oberflächenstruktur 18 als auch die erste Oberflächenstruktur 6 auf der Oberfläche 20 des zweiten Bauteils 4a angeordnet sein. Ebenso können die Oberfläche 12 oder 20 des ersten bzw. zweiten Bauteils 4b mit einer eine abbildende (vergrößernde) Brechkraft erzeugenden dritten Oberflächenstruktur versehen werden, so dass die Krümmung der Oberfläche 10 entfallen kann oder zusätzlich eine Erhöhung der Brechkraft möglich ist.

In der vergrößerten Darstellung nach Figur 7 ist außerdem zu erkennen, dass sich zwischen dem ersten und dem zweiten Bauteil 4a und 4b ein kleiner Spalt 22 befindet, um beim Zusammensetzen der Bauteile 4a,b eine Beschädigung der jeweiligen Oberflächenstrukturen zu vermeiden.

Die Linse 4 bzw. deren Bauteile 4a, b bestehen vorzugsweise aus Polymethacrylat PMMA, Polycarbonat PC oder aus einem Werkstoff aus der Familie der Cycloolefin-Copolymere COC, so dass sie kostengünstig in einem spritztechnischen Verfahren hergestellt werden können.

## Patentansprüche

1. Binokulare Sehhilfe für den Nahbereich, mit einer Linse (4) mit einer auf ihrer Oberfläche (12) angeordneten ersten, um eine außerhalb der Linse (4) angeordnete Drehachse (8) rotationssymetrischen Oberflächenstruktur (6) zum Erzeugen einer prismatischen Brechkraft.

2. Binokulare Sehhilfe nach Anspruch 1, bei der die erste Oberflächenstruktur (6) die Abbildungseigenschaften eines Ausschnittes aus dem Randbereich einer fokussierenden Linse hat.

3. Binokulare Sehhilfe nach Anspruch 1 oder 2, bei der die erste Oberflächenstruktur (6) durch konzentrisch um eine Drehachse (8) angeordnete Zahnringe (14) gebildet ist, deren Flanken (16) in einer die Drehachse (8) enthaltenden Schnittebene gekrümmt sind.

4. Binokulare Sehhilfe nach Anspruch 2 oder 3, bei der die erste Oberflächenstruktur (6) eine diffraktive Struktur ist.

5. Binokulare Sehhilfe nach Anspruch 4, bei der die diffraktive Struktur eine MOD-Struktur ist.

6. Binokulare Sehhilfe nach Anspruch 2 oder 3, bei der die erste Oberflächenstruktur (6) eine Fresnelstruktur ist.

7. Binokulare Sehhilfe nach Anspruch 1, bei der die erste Oberflächenstruktur (6) durch konzentrisch angeordnete Kegelflächen gebildet ist.

8. Binokulare Sehhilfe nach einem der vorhergehenden Ansprüche, bei der die erste Oberflächenstruktur (6) auf einer planen Oberfläche (12) angeordnet ist.

9. Binokulare Sehhilfe nach einem der vorhergehenden Ansprüche, die aus einem ersten und einem zweiten Bauteil (4a bzw. 4b) derart zusammengesetzt ist, dass die erste Oberflächenstruktur (6) auf einer innenliegenden Oberfläche (12) angeordnet ist.

10. Binokulare Sehhilfe nach einem der vorhergehenden Ansprüche, bei der zur Farbkorrektur eine zweite Oberflächenstruktur (18) vorgesehen ist.

11. Binokulare Sehhilfe nach Anspruch 10 in Verbindung mit Anspruch 9, bei der die erste Oberflächenstruktur (6) auf dem ersten Bauteil (4a) und die zweite Oberflächenstruktur (18) auf der dem ersten Bauteil (4a) zugewandten Oberfläche (20) des zweiten Bauteils (4b) angeordnet ist.

12. Binokulare Sehhilfe nach einem der vorhergehenden Ansprüche, bei der zum Erzeugen einer abbildenden Brechkraft eine dritte Oberflächenstruktur vorgesehen ist.

13. Binokulare Sehhilfe nach Anspruch 10 oder 12, bei der die farbkorrigierende zweite Oberflächenstruktur der ersten oder der dritten Oberflächenstruktur überlagert ist.
